# EUROPÄISCHE PATENTSCHRIFT

(11) **EP 3 206 081 B1**
(45) Veröffentlichungstag und Bekanntmachung des Hinweises auf die Patenterteilung: **22.08.2018**
(21) Anmeldenummer: 17155048.6
(22) Anmeldetag: 07.02.2017
(51) Int. Cl.: G02F 1/37, G02F 1/39

(54) **OPTISCHE VERSTÄRKER-ANORDNUNG, LASER-VERSTÄRKER-SYSTEM UND VERFAHREN ZUR ERZEUGUNG EINES BREITEN SICHTBAR BIS INFRAROTEN, SPEKTRUMS VON KOHÄRENTEN ULTRA-KURZEN LICHTPULSEN MIT EINER OPTISCHEN VERSTÄRKER-ANORDNUNG**
OPTICAL AMPLIFIER, LASER AMPLIFIER SYSTEM AND METHOD TO PRODUCE A BROAD VISIBLE TO INFRARED, ASPECTRUM OF COHERENT ULTRA-SHORT LIGHTPULSE WITH AN OPTICAL AMPLIFIER
DISPOSITIF D'AMPLIFICATION OPTIQUE, LASER LE COMPRENANT, ET PROCÉDÉ DE PRODUCTION SPECTRE LARGEBANDE VISIBLE ET INFRAROUGE, SPECTRE COHÉRANTE ET ULTRA-COURTE IMPULSION LUMINEUSE AVEC UN TEL DISPOSITIF

(30) Priorität: 11.02.2016 DE 102016202098
(43) Veröffentlichungstag der Anmeldung: 16.08.2017
(73) Patentinhaber: APE Angewandte Physik und Elektronik GmbH, 13053 Berlin (DE)
(72) Erfinder: Beutler, Marcus, 10245 Berlin (DE); Rimke, Ingo, 10999 Berlin (DE)
(74) Vertreter: Eisenführ Speiser

(56) Entgegenhaltungen:
- EP-A1- 2 924 500
- ANNE HARTH ET AL: "Two-color pumped OPCPA system emitting spectra spanning 15 octaves from VIS to NIR", OPTICS EXPRESS, VOL. 16, NO. 7, PP. 4479-4486 (2008), Bd. 20, Nr. 3, 30. Januar 2012 (2012-01-30), Seite 3076, XP55202625, ISSN: 2161-2072, DOI: 10.1364/OE.20.003076
- MANZONI C ET AL: "Tunable few-optical-cycle pulses with passive carrier-envelope phase stabilization from an optical parametric amplifier", APPLIED PHYSICS LETTERS, A I P PUBLISHING LLC, US, Bd. 90, Nr. 17, 26. April 2007 (2007-04-26), Seiten 171111-171111, XP012094305, ISSN: 0003-6951, DOI: 10.1063/1.2732834

## Beschreibung

Die Erfindung betrifft eine optische Verstärker-Anordnung gemäß dem Oberbegriff des Anspruchs 1, ein Laser-Verstärker-System mit einer optischen Verstärker-Anordnung und ein Verfahren zur Erzeugung eines breiten sichtbar bis infraroten, jedenfalls nah-infraroten, Spektrums von kohärenten ultra-kurzen Lichtpulsen mit einer optischen Verstärker-Anordnung.
Verfahren zur Erzeugung eines Spektrums von kohärenten ultra-kurzen Lichtpulsen mit einer optischen Verstärker-Anordnung --wenn auch nicht eines breiten sichtbar bis infraroten, jedenfalls nah-infraroten, Spektrums von kohärenten ultra-kurzen Lichtpulsensind grundsätzlich bekannt.
Das Deutsche Patent- und Markenamt hat zu der deutschen Prioritätsanmeldung mit dem Aktenzeichen 10 2016 202 098.6 zu der vorliegender Anmeldung folgenden Stand der Technik recherchiert: EP 2 924 500 A1 und die Dissertation an der LMU München von Christian Homann mit dem Titel "Optical parametric processes to the extreme from new insights in first principles to tunability over more than 4 octaves" (2012).

Die Erfindung sieht eine optische Verstärker-Anordnung und ein Verfahren mit optisch-parametrischen Verstärkern ("optical parametric amplifier") der Verstärker-Anordnung vor zur Erzeugung eines breiten sichtbar bis infraroten, jedenfalls nah-infraroten, Spektrums von kohärenten ultra-kurzen Lichtpulsen. Die Erfindung geht --dem Konzept nach-- aus von einer grundsätzlich bekannten Anordnung von mindestens zwei OPA ("optical parametric amplifier"), d. h. wenigstens einem ersten optischen parametrischen Verstärker (OPA1) und einem zweiten optischen parametrischen Verstärker (OPA2) aus, die mit verschiedenen Wellenlängen gepumpt und geseedet werden; d. h. (im Rahmen der dafür bekannten englischen Fachsprache) am Eingang mit Eingangspulsen (Seed-Pulsen) beaufschlagt werden, die verstärkt werden mittels einem Konversionsprozess bei zeitlicher und örtlicher Überdeckung eines Seed-Pulses mit einem Pump-Puls in einem nicht-linearen Medium, wie einem nicht-linearen Kristall oder dergleichen, im OPA.

EP 2 924 500 A1 offenbart ein Verfahren zur Verarbeitung von Femtosekunden-Lichtpulsen aus einer Fundamental-Frequenz eines Primärlasers mit einem System zweier optisch-parametrischer Verstärker, denen ein Puls-Stretcher, ein weiterer optisch-parametrischer Verstärker und ein Puls-Kompressor bzw. ein Verstärker zur Erzeugung der Femtosekunden-Lichtpulse hoher Puls-Energie vorgeschaltet ist. Bereits der erste und auch der zweite der beiden optisch-parametrischen Verstärker des Systems werden jeweils mit einer zweiten Harmonischen der Fundamentalen gepumpt; der erste der beiden optisch-parametrischen Verstärker des Systems mit einer zweiten Harmonischen der Pulse aus dem Puls-Kompressor und der zweite der beiden optisch-parametrischen Verstärker des Systems mit einer zweiten Harmonischen der Pulse aus dem Verstärker. Der zweite der beiden optisch-parametrischen Verstärker des Systems wird mit gestretchten Pulsen direkt aus dem ersten optisch-parametrischen Verstärker geseedet, um diese mit den Pumppulsen der zweiten Harmonischen der Pulse aus dem Verstärker im zweiten der beiden optisch-parametrischen Verstärker des Systems zu verstärken.

Die Erfindung sieht dagegen den OPA1 zum Erzeugen eines rotverschobenen Pulses aus einem bereits spektral verbreiterten Kontinuum von Licht relativ geringer Intensität vor - letzteres aus einer in seiner breiten Bedeutung mit Weißlicht-Erzeugung bezeichneten Einheit (WLC1).

Dieser rotverschobene Puls wird dann zum Erzeugen eines lückenlosen vergleichsweise extrem breiten Kontinuums von Licht relativ geringerer Intensität genutzt. Dies geschieht durch eine weitere nichtlineare Wechselwirkung in einem Medium, bevorzugt Festkörper, wo eine starke spektrale Verbreiterung stattfindet - dies wird in seiner breiten Bedeutung ebenfalls mit Weißlicht-Erzeugung bezeichnet. (WLC2). Die bei Weißlicht-Erzeugung (WLC, insbesondere WLC1 und WLC2) eine Rolle spielenden Prozesse sind im englischen unter den Begrifflichkeiten "self phase modulation", "filamentation", "supercontinuum generation" und "white light generation" bekannt.

Das nachfolgend genutzte Seed-Licht bzw. die spektralen Eigenschaften der Seed-Pulse sind im Allgemeinen bei einer anderen Frequenz ("Farbe") als der rotverschobene Puls aus dem OPA1 und dieses Seed-Licht bzw. die Seed-Pulse dienen somit wiederum als Seed-Puls für den OPA2. Dieser verstärkt dann einen Teil des so bezeichneten Superkontinuums.

Prinzipiell besteht ein OPA ("optical parametric amplifier"), aus einer niederenergetischen Quelle von Strahlung ("Seed"), die zusammen mit einer Quelle hoher Energie und kürzerer Wellenlänge ("pump") in einem nichtlinearen Medium zeitlich und räumlich überlagert wird. Um eine Verstärkung des Seed zu erreichen, muss nun eine Phasenanpassung ("phase matching", PM) erreicht werden, was durch Methoden wie die Nutzung doppelbrechender Kristalle oder Quasi-Phase-Matching (QPM) oder dergleichen nicht-linearen Medien geschieht. Deshalb wird vorliegend sprachlich unterschieden zwischen einem "seeden" eines Strahlungserzeugers, insbesondere eines OPA" und einem "pumpen" eines Strahlungserzeugers, insbesondere eines OPA und/oder einer WLC. Die dazugehörigen Strahlführungen sind gemäß den dazugehörigen Pulsenergien im entsprechenden Strahlungspfad des "Seed" bzw. "Pump" ausgelegt.

Dieses Konzept zweier aufeinander folgender OPA (in Englisch "optical parametric amplifier", OPA) mit zwischenliegender nichtlinearer spektraler Verbreiterung jeweils mit einer als Weißlicht-Erzeugung bezeichneten Einheit (WLC) wurde im Grundsatz in der Literatur gezeigt wie z.B. von Manzoni et. al. in Appl. Phys. Lett. 90, 171111 (2007) oder Riedle et al. in Appl. Phys. B 71, 457-465 (2000). Allerdings basieren alle diese Arbeiten auf der Nutzung von (Titan-Saphir, Ti:Sa)-Lasern als Pumplaser, d.h. bei einer Pump-Wellenlänge um 800nm bis 850nm und mit einer geringen Wiederholrate des Puls-Zugs (1 kHz). Soweit wurde dieses Grundprinzip mit OPA --nämlich dort eine spezielle Variante eines ordentlichen OPA (oOPA) namens non-collinear OPA (nOPA) bei 800 nm, 1 kHz, 400 µJ, und Pulsdauern von 60 fs-- gezeigt.

Bei diesen Bedingungen und im Optimum des Ti:Sa-Spektrums können deutlich hohe Pulsenergien (>300 µJ) bei zudem sehr kurzen Pulsdauern (-60 fs) genutzt werden; d.h. letztlich bestehen beste Vorrausetzungen zur Nutzung dieses Pumplasers im Rahmen der mehrfach-nichtlinearen Konversionsprozesse einer eingangs genannten optischen Verstärker-Anordnung im kurzwelligeren Bereich unterhalb eines breiten sichtbar bis nah-infraroten Spektrums von kohärenten ultra-kurzen Lichtpulsen. Ein Verfahren der insofern erweiterten Seed-Erzeugung für einen zweiten OPA wurde insofern zwar von Manzoni et al. bzw. Riedle et al. publiziert.

Dies erfolgt jedoch unter Verwendung eines Pumplasers mit vergleichsweise kurzer Wellenlänge und Pulsdauer sowie geringer Wiederholrate. Zudem präferiert Manzoni et. al die Erzeugung von Phasen-Enveloppe stabilen Pulsen und verwendet einen Idler-Ausgang des pre-OPA, um zu einer im Vordergrund stehenden Kohärenzeigenschaft zu kommen. Konkret werden Pulse mit einer zwar grundsätzlich vorhandener Phasen-Enveloppe (CEP), bei Verwendung des genannten Idler-Ausgangs betreffend diese Eigenschaft stabil ("CEP-stabil" engl: CEP-stable). Riedle et al. sieht darüber hinaus einen SHG-gepumpten OPA1 vor; diesen zudem in einer nicht-collinearen Anordnung - insofern stellen bisher bekannte Verfahren der erweiterten Seed-Erzeugung für einen zweiten OPA (OPA2) auf spezielle Alternativen ab, die sich deutlich unterscheiden.

Sehr problematisch in seiner Umsetzung wird das vorgenannte Konzept zudem, wenn nicht die vorgenannten Ti:Sa-basierten besten Vorrausetzungen zur Nutzung dieses Pumplasers im Rahmen der mehrfach-nichtlinearen Konversionsprozesse einer eingangs genannten optischen Verstärker-Anordnung gegeben sind. Die Probleme stehen bislang insbesondere einer kommerziellen Anwendung solcher Anordnungen im Wege. Interessant ist jedoch gerade die kommerzielle Nutzung solcher Anordnungen zur Erzeugung eines breiten sichtbar bis infraroten, jedenfalls nah-infraroten, Spektrums von kohärenten ultra-kurzen Lichtpulsen.

An dieser Stelle setzt die Erfindung an, deren Aufgabe es ist, eine Anordnung und ein Verfahren anzugeben, mittels dem die Erzeugung eines kontinuierlichen breiten, insbesondere eines vom Sichtbaren bis ins Infrarote, jedenfalls Nah-Infrarote, reichenden, Spektrums von kohärenten ultra-kurzen Lichtpulsen möglich ist. Insbesondere soll eine Umsetzung der mehrfach-nichtlinearen Konversionsprozesse der eingangs genannten optischen Verstärker-Anordnung gegeben sein auch bei einem breiten sichtbar bis infraroten, jedenfalls nah-infraroten, Spektrum von kohärenten ultra-kurzen Lichtpulsen und deutlich schlechteren Bedingungen als den zuvor genannten besten Ti:Sa-basierten Vorrausetzungen eines Pumplasers.

Insbesondere soll eine Umsetzung der mehrfach-nichtlinearen Konversionsprozesse der eingangs genannten optischen Verstärker-Anordnung gegeben sein auch bei niedrigerer Pulsenergie eines breiten sichtbar bis infraroten, jedenfalls nah-infraroten, Spektrums von kohärenten ultra-kurzen Lichtpulsen, insbesondere bei Pulsenergien bis hinunter zu 1 µJ und weniger als 10µJ, jedenfalls deutlich unter 300µJ, insbesondere unter 100 µJ.

Vorzugsweise soll eine Umsetzung der mehrfach-nichtlinearen Konversionsprozesse der eingangs genannten optischen Verstärker-Anordnung auch gegeben sein bei längeren Pulsen, vorzugsweise über 150 fs, insbesondere über 300 fs oder über 500 fs, insbesondere über 1 ps.

Insbesondere soll eine Durchstimmbarkeit eines derart erzeugten breiten sichtbar bis infraroten, jedenfalls nah-infraroten, Spektrums -d.h. bevorzugt zwischen 500 nm bis deutlich jenseits 2000 nm, insbesondere deutlich jenseits 3000 nm, bevorzugt jedenfalls bis zu 5 µm oder darüber-- von kohärenten ultra-kurzen Lichtpulsen verbessert werden. Insbesondere sollen eine Handhabbarkeit der Anordnung und des Verfahrens sowie eine Stabilität eines derart erzeugten breiten sichtbar bis infraroten, jedenfalls nah-infraroten, Spektrums von kohärenten ultra-kurzen Lichtpulsen verbessert werden.

Insbesondere soll eine Umsetzung der mehrfach-nichtlinearen Konversionsprozesse der eingangs genannten optischen Verstärker-Anordnung gegeben sein, bei welcher die Strahlpolarisationen und Strahlausgänge der Strahlungserzeuger, insbesondere OPA und/oder WLC, vorteilhaft genutzt werden

Die Aufgabe, betreffend das Verfahren, wird durch die Erfindung mit einem Verfahren des Anspruchs 1 gelöst.

Die Erfindung geht aus von einer optischen Verstärker-Anordnung von optischen parametrischen Verstärkern und Weißlicht-Erzeugungen und einer Harmonischen-Erzeugung, insbesondere Frequenzverdoppelung zur Erzeugung eines breiten sichtbar bis infraroten, jedenfalls nah-infraroten, Spektrums von kohärentem ultra-kurzen Lichtpulsen, insbesondere mit einem Pump-Laser, aufweisend:
- eine erste Weißlicht-Erzeugung und einen ersten optischen parametrischen Verstärker zur Erzeugung eines ersten Signal-Lichts und eines ersten Idler-Lichts sowie eine zweite Weißlicht-Erzeugung und einen zweiten optischen parametrischen Verstärker zur Erzeugung eines zweiten Signal-Lichts und eines zweiten Idler-Lichts und die Harmonischen-Erzeugung, die derart optisch gekoppelt sind, dass
- im Betrieb der erste optische parametrische Verstärker von der ersten Weißlicht-Erzeugung geseeded und der zweite optische parametrische Verstärker von der zweiten Weißlicht-Erzeugung geseeded wird, und wobei im Betrieb
- die erste Weißlicht-Erzeugung und der erste optische parametrische Verstärker und die Harmonischen-Erzeugung von einer Fundamentalen eines Lasers gepumpt werden, wobei ein Seed des ersten optischen parametrischen Verstärkers mittels der ersten Weißlicht-Erzeugung erfolgt, und
- die zweite Weißlicht-Erzeugung mittels dem ersten optischen parametrischen Verstärker erfolgt und der zweite optische parametrische Verstärker von einer zweiten oder höheren Harmonischen der Fundamentalen des Pump-Lasers gepumpt wird, wobei ein Seed des zweiten optischen parametrischen Verstärkers mittels der zweiten Weißlicht-Erzeugung erfolgt.

Erfindungsgemäß ist bei der optischen Verstärker-Anordnung vorgesehen, dass
- im Betrieb die Fundamentale in einem Wellenlängenbereich oberhalb von 950nm liegt, und
- das zweite Signal-Licht und das zweite Idler-Licht des zweiten optischen parametrischen Verstärkers zusammen einen Durchstimmbarkeitsbereich von Wellenlängen zwischen 500nm und 5µm, insbesondere zwischen 550nm und 3µm abdecken, wobei
- zwischen Wellenlängen im Durchstimmbarkeitsbereich durchgehend kontinuierlich durchgestimmt werden kann.

Insbesondere soll kontinuierlich durchgestimmt werden können durch den Degenerationsbereich des zweiten optischen parametrischen Verstärkers (OPA2), d.h. durch einen Degenerationsbereich des zweiten optischen parametrischen Verstärkers (OPA2) bei der Fundamentalen, vorzugsweise des Pump-Lasers.

Die Erfindung führt auch auf ein Verfahren nach Anspruch 13, zur Erzeugung eines breiten sichtbar bis infraroten, jedenfalls nah-infraroten, Spektrums von kohärenten ultrakurzen Lichtpulsen mit einer Optische-Verstärker-Anordnung der vorgenannten Art.

Die Erfindung geht insofern aus von einem Verfahren zur Erzeugung eines breiten sichtbar bis infraroten, jedenfalls nah-infraroten, Spektrums von kohärenten ultra-kurzen Lichtpulsen mit einer optischen Verstärker-Anordnung von optischen parametrischen Verstärkern und Weißlicht-Erzeugungen und einer Harmonischen-Erzeugung, insbesondere Frequenzverdoppelung, zur Erzeugung eines breiten sichtbar bis infraroten, jedenfalls nah-infraroten, Spektrums von kohärentem Licht, insbesondere mit einem Pump-Laser, insbesondere mit einer Optische-Verstärker-Anordnung nach einem der Ansprüche 1 bis 10 oder einem Laser-Verstärker-System nach Anspruch 11 oder 12, aufweisend:
- eine erste Weißlicht-Erzeugung und einen ersten optischen parametrischen Verstärker zur Erzeugung eines ersten Signal-Lichts und eines ersten Idler-Lichts sowie eine zweite Weißlicht-Erzeugung und einen zweiten optischen parametrischen Verstärker zur Erzeugung eines zweiten Signal-Lichts und eines zweiten Idler-Lichts und die Harmonischen-Erzeugung, die derart optisch gekoppelt sind, dass
- im Betrieb der erste optische parametrische Verstärker von der ersten Weißlicht-Erzeugung gepumpt und der zweite optische parametrische Verstärker von der zweiten Weißlicht-Erzeugung gepumpt wird, und wobei im Betrieb
- die erste Weißlicht-Erzeugung und der erste optische parametrische Verstärker und die Harmonischen-Erzeugung von einer Fundamentalen eines Lasers gepumpt werden, wobei ein Seed des ersten optischen parametrischen Verstärkers mittels der ersten Weißlicht-Erzeugung erfolgt, und
- die zweite Weißlicht-Erzeugung mittels dem ersten optischen parametrischen Verstärker erfolgt und der zweite optische parametrische Verstärker von einer zweiten oder höheren Harmonischen der Fundamentalen des Pump-Lasers gepumpt wird, wobei ein Seed des zweiten optischen parametrischen Verstärkers mittels der zweiten Weißlicht-Erzeugung erfolgt.

Erfindungsgemäß ist weiter vorgesehen, dass
- im Betrieb die Fundamentale in einem Wellenlängenbereich oberhalb von 950nm liegt, und
- das zweite Signal-Licht und das zweite Idler-Licht des zweiten optischen parametrischen Verstärkers zusammen einen Durchstimmbarkeitsbereich von Wellenlängen zwischen 500nm und 5µm, insbesondere zwischen 550nm und 3µm, abdecken, wobei
- zwischen Wellenlängen im Durchstimmbarkeitsbereich durchgehend kontinuierlich durchgestimmt werden kann.

Insbesondere soll kontinuierlich durchgestimmt werden können durch den Degenerationsbereich von OPA2, d.h. durch einen Degenerationsbereich des zweiten optischen parametrischen Verstärkers (OPA2) bei der Fundamentalen, vorzugsweise des Pump-Lasers.

Die Erfindung führt auch auf ein Laser-Verstärker-System gemäß dem Anspruch 11, d. h. mit einer optischen Verstärker-Anordnung der vorgenannten Art und einem Pump-Laser.

Insbesondere lässt sich das Konzept der Erfindung im Rahmen der Aufgabenstellung sowie hinsichtlich weiterer Vorteile wie folgt bevorzugt erläutern.

Das erste und zweite Weißlicht dient jeweils als Seed-Licht und die entsprechende erste und zweite Weißlicht-Erzeugung ist jeweils eingangsseitig vor dem ersten bzw. zweiten optischen parametrischen Verstärker angeordnet. Im Betrieb wird entsprechend der erste bzw. zweite optische parametrische Verstärker von der ersten bzw. zweiten Weißlicht-Erzeugung jeweils geseedet. Optisch gekoppelt sind alle Licht Erzeugungen im Rahmen ihrer Anordnung in einer Strahlführung eines optischen Aufbaus mit Spiegeln, Prismen, Kristallen etc. sowie Verzögerungstrecken für die zeitliche Verzögerung von Pump- und Seed-Pulsen (also Seed-Licht) relativ zu einander.

Gegenstand einer bevorzugten Ausführungsform der Erfindung ist beispielsweise eine wellenlänge-abstimmbare Lichtquelle, also eine optische Verstärker-Anordnung der vorgenannten Art, für ultrakurze (<1 Pikosekunde, ps) Impulse und ein Verfahren zur Erzeugung von ultrakurzen (<1 Pikosekunde, ps) Impulsen mittels der Anordnung der optisch parametrischen Verstärker ("optical parametric amplifier", OPA). Primär soll damit der Wellenlängenbereich im sichtbaren Bereich (VIS) und nahen/mittleren Infrarot (NIR/MIR) abgedeckt werden (ca. 600-2600 nm).

Die OPA-Anordnung wird insofern gepumpt mit einer Quelle ultrakurzer Licht-Impulse - im Rahmen einer bevorzugten Ausführungsform der Erfindung beispielsweise mit einer Pulsdauer (Pulslänge) oberhalb von 100fs, insbesondere oberhalb von 150fs, insbesondere oberhalb von 350fs, insbesondere oberhalb von 500fs oder oberhalb von 1ps und/oder unterhalb von 2ps sowie vergleichsweise hoher Pulsenergie (>>µJ). Diese können sowohl eine feste Wellenlänge/Frequenz haben, als auch ihrerseits abstimmbar sein. Im Allgemeinen beruhen solche Quellen auf dem Prinzip der chirped pulse amplification (CPA)-Technik oder einem ähnlichen Prinzip. Vorzugsweise ist der Pump-Laser ausgewählt aus der Gruppe von Lasern bestehend aus: Yb-Laser, Er-Laser, Nd - Laser, Tm-Laser.

Die gesamte Anordnung mit Pumplaser dient auch als Basis für eine Erweiterung in den UV-Bereich mittels Wellenlängenvervielfachung oder in mittlere/fernes Infrarot (MIR/FIR bzw. THz-Bereich) durch Differenz-Frequenzerzeugung (DFG). Der VIS/NIR Wellenlängenbereich soll dabei lückenlos ("gap-free") abgedeckt werden und einen Bereich von mehr als einer Oktave abdecken.

Diese und andere Erweiterungen sind auch mit dem Gegenstand einer Anordnung und eines Systems gemäß den Ansprüchen 1 und 11 und eines Verfahrens nach Anspruch 13 erfasst.

Kurz und beispielhaft gesagt betrifft die Erfindung den Gegenstand zur Erzeugung eines breiten sichtbar bis infraroten, jedenfalls nah-infraroten, Spektrums von kohärenten ultrakurzen Lichtpulsen mit einer optischen Verstärker-Anordnung von optischen parametrischen Verstärkern und eine optische Verstärker-Anordnung von optischen parametrischen Verstärkern sowie ein Laser-Verstärker-System. Ein solcher Gegenstand umfasst gemäß der Erkenntnis der Erfindung einen für die industrietaugliche Umsetzung für ein infrarotes, jedenfalls nah-infrarotes, Spektrum von kohärenten ultra-kurzen Lichtpulsen erforderlichen Pre-OPA (OPA1) und mit einer oben beschriebenen erweiterten Weißlicht-Generierung, die designt sind für Pump-Laser der Wellenlängen über 950nm, insbesondere nahe 1 µm (Nd/Yb-Laser und Verwandte), 1.5 µm (Erbium-Laser), 1850nm, insbesondere um 2µm (Thulium, Cr:ZnS; Cr:ZnSe); ein solcher Gegenstand ist vorzugsweise zudem ausgelegt für eine Pulsdauer (Pulslänge) oberhalb von 100fs, insbesondere oberhalb von 150fs, insbesondere oberhalb von 350fs, insbesondere oberhalb von 500fs oder oberhalb von 1ps und/oder unterhalb von 2ps.

Die Bereitstellung des Seed ist wie sich zeigt und von der Erfindung erkannt dabei zudem mit zwei grundsätzlichen Problemen behaftet: Neben (1) der notwendigen spektralen Leistungsdichte im interessanten Wellenlängenbereich (Verstärkungsbereich des main-OPA) ist dies (2) das Bereitstellen eines kontinuierlichen Spektrums von hoher zeitlicher und räumlicher Kohärenz ohne Lücken.

Bei einem OPA gibt es zunächst einen Degenerationspunkt bei einer bestimmten Wellenlänge, d.h. dies ist die Wellenlänge in einem OPA, bei der Signal und Idler gleicher Wellenlänge sind, d.h. für einen SHG-gepumpten OPA wie hier ist die Pumpwellenlänge des Lasers der Degenerationspunkt.

Charakteristisch für ein Weißlicht-Spektrum aus einer Weißlicht-Erzeugung ist -wie von der Erfindung erkannt-- eine gewisse zeitlich und/oder spektral instabile Amplituden- und Phasen-Modulation des Weißlichts um die Wellenlängen der Erzeugenden herum. Das Konzept nur eines direkt mit einem Weißlicht geseedeten und mit einer jedenfalls zweiten Harmonischen gepumpten optische parametrischen Verstärkers führt deshalb zu einer instabilen Lücke im Ausgangsspektrum; das nutzbare Ausgangsspektrum des optischen parametrischen Verstärkers hat somit eine Durchstimmbarkeitslücke aufgrund der genannten Instabilitäten des Weißlicht-Seeds.

Im Einzelnen hat die Erfindung erkannt:
1. Der Degenerationspunkt eines OPA ist der, bei jener Wellenlänge, in welcher die Wellenlänge des Signals und des Idlers übereinstimmen; d.h. vorliegend bei der doppelten Pumpwellenlänge. Beim SHG gepumpten OPA (hier OPA2) ist der Degenerationspunkt damit gleich der fundamentalen Wellenlänge, d.h. der Laserwellenlänge vorzugsweise des Pump-Lasers.
2. Das Weißlicht ist immer instabil (starke Amplituden- und Phasenmodulationen) im Bereich der erzeugenden fundamentalen Wellenlänge, vorzugsweise des Pump-Lasers.
3. Wenn also Weißlicht bei einem SHG-gepumpten OPA mit der Laserwellenlänge erzeugt wird, ist der OPA im Degenerationsbereich instabil aufgrund des instabilen Weißlichts, d.h. regelmäßig nicht kontinuierlich durchstimmbar in dem Degenerationsbereich des zweiten optischen parametrischen Verstärkers (OPA2) bei der Fundamentalen, vorzugsweise des Pump-Lasers.

Aus diesem Grund zielt das OPA-Konzept des Gegentands der Erfindung auf die Bereitstellung eines solchen lückenlosen Seeds ab. OPA1 dient der Erzeugung eines zu längeren Wellenlängen hin verschobenen Pulses, der wiederum genutzt wird, um einen Seed noch größerer spektraler Bandbreite zu erzeugen als es nur durch die Verwendung des Lichts aus dem Pumplaser möglich wäre. Dies hat den Vorteil, dass der OPA2 in der Lage ist, über seinen Degenerationspunkt hinweg zu tunen, d.h. der zweite optische Verstärker (OPA2) kann über seinen Degenerationsbereich bei der Fundamentalen, vorzugsweise des Pump-Lasers, kontinuierlich durchgestimmt werden, ohne dass das Ausgangsspektrum eine instabile Lücke im obigen Sinne aufweist.

Wenn nämlich die erzeugende Wellenlänge für das Weißlicht verschoben wird (weg vom Degenerationspunkt) -vorliegend gemäß dem Konzept der Erfindung mittels dem ersten optische parametrische Verstärker OPA1-- ist das Weißlicht (WLC2) im Degenerationspunkt des zweiten optischen parametrischen Verstärkers OPA2 stabil und damit auch OPA2. Weißlicht ist zwar immer noch im Bereich um die erzeugende Wellenlänge instabil; da aber das Signal und der Idler des OPA1 unterschiedlich sind (nicht am Degenerationspunkt), kann die Wellenlänge immer noch anders durchgestimmt werden. Z. B. kann dies umgesetzt werden indem das Signal geseeded wird, das zu der entsprechenden Idlerwellenlänge gehört, die dann identisch mit der erzeugenden Weißlichtwellenlänge sein kann.

Das Konzept bietet zudem folgende unmittelbare Vorteil einer Implementierung bei der sich ein Nutzen des Signal vom Pre-OPA (OPA1) für WLC ergibt. Auch gingen THzgepumpte OPAs oder NOPAs wobei trotzdem ein Tuning über den Entartungspunkt möglich ist, da weniger Licht erforderlich ist für den pre-OPA (OPA1).

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Bevorzugt erfolgt die zweite Weißlicht-Erzeugung mittels des ersten Signallichts des ersten optischen parametrischen Verstärkers. Mit dem energiereicheren Signallicht, das zudem nicht soweit im Infraroten liegt wie das Idlerlicht lässt sich einfacher und intensiver ein Weißlicht im gesamten relevanten Bereich erzeugen. Eine andere Implementierung nutzt den Idler vom Pre-OPA für WLC - der main-OPA ist dadurch passiv CEP-stabil, d.h. dessen Carrier-Enveloppe ist phasen-stabil zur Wellenlänge. Eine solche Implementierung steht vorliegend nicht im Vordergrund - eine industrietaugliche und stabile Systembereitschaft ergibt sich vorliegend über die zweite Weißlicht-Erzeugung mittels des ersten Signallichts.

Es zeigt sich im Rahmen einer Weiterbildung, dass es Vorteile hat, dass bevorzugt das erste Signallicht des ersten optischen parametrischen Verstärkers, insbesondere die zweite Weißlicht-Erzeugung, bei Wellenlängen in einem Bereich erzeugt werden, die wenigstens bis zu 5% länger sind als die Wellenlänge der Fundamentalen vorzugsweise des Pump-Lasers. Die Weiterbildung hat erkannt, dass dies eine besonders vorteilhafte Vorrausetzung zur Gewährleistung der spektralen Eigenschaften des breiten sichtbar bis infraroten, jedenfalls nah-infraroten, Spektrums von kohärenten ultra-kurzen Lichtpulsen darstellt, wenn dies kontinuierlich durchstimmbar sein soll, insbesondere durch einen Degenerationsbereich des zweiten optischen parametrischen Verstärkers (OPA2) bei der Fundamentalen, vorzugsweise des Pump-Lasers.

Vorzugsweise ist im Rahmen einer Anwendung des breiten sichtbar bis infraroten, jedenfalls nah-infraroten, Spektrums von kohärenten ultra-kurzen Lichtpulsen vorgesehen, dass
- die optischen parametrischen Verstärker und Weißlicht-Erzeugungen ausgebildet sind, insbesondere die erste Weißlicht-Erzeugung und der erste optische parametrische Verstärker sowie eine Harmonischen-Erzeugung, insbesondere Frequenzverdoppelung, ausgebildet sind, von einem Laser gepumpt zu werden, der
- die Fundamentale in einem Wellenlängenbereich oberhalb von 950 nm, insbesondere knapp oberhalb von 1µm oder knapp oberhalb von 2 µm, liefert, und
- mit einer Pulsenergie unterhalb von 300 µJ, insbesondere unterhalb von 100 µJ, und/oder
- mit einer Repetitionsrate oberhalb von 50kHz, insbesondere oberhalb von 100 kHz, und/oder
- mit einer Pulsdauer (Pulslänge) oberhalb von 100 fs, insbesondere oberhalb von 150 fs, insbesondere oberhalb von 350 fs, insbesondere oberhalb von 500 fs oder oberhalb von 1 ps und/oder unterhalb von 2 ps. Der Hauptbereich der Pulslängen liegt vorzugsweise um 300-350 fs. Ein bevorzugter Bereich umfasst zeitliche Pulslängen zwischen 200fs bis 500fs oder breiter von 200 fs bis 2 ps. Gegebenenfalls kann sogar mit Pulsen der Pulslänge bis zu 5 ps oder 10 ps gearbeitet werden; letztlich erlaubt das vorliegende Konzept auch größere Pulslängen selbst unter der Berücksichtigung ,dass mit größeren Pulslängen die Effizienz der nicht-linearen Prozesse abnehmen sollte.

Vorzugsweise ist im Rahmen einer Anwendung im nahen IR-Bereich des breiten sichtbar bis infraroten, jedenfalls nah-infraroten, Spektrums von kohärenten ultra-kurzen Lichtpulsen vorgesehen, dass
- die Fundamentale von einem Pump-Laser erzeugt ist, der ausgewählt ist aus der Gruppe von Lasern bestehend aus: Yb-Laser, Er-Laser, Nd, wobei
- im Betrieb die Fundamentale in einem Wellenlängenbereich oberhalb von 950 nm liegt, insbesondere knapp oberhalb von 1 µm liegt, und
- das zweite Signal-Licht und das zweite Idler-Licht des zweiten optischen parametrischen Verstärkers zusammen einen Durchstimmbarkeitsbereich von Wellenlängen zwischen 500 nm und 5000 nm abdecken, wobei
- zwischen Wellenlängen im Durchstimmbarkeitsbereich durchgehend kontinuierlich durchgestimmt werden kann, insbesondere kontinuierlich durchgestimmt werden kann durch einen Degenerationsbereich der Fundamentalen, vorzugsweise des Pump-Lasers.

Betreffend Er liegt die erzeugte Pump-Wellenlänge bei 1550nm, die 1µm Laser sind meist entweder Nd oder Yb dotierte Materialien.

Vorzugsweise ist im Rahmen einer Anwendung im fernen IR-Bereich des breiten sichtbar bis infraroten, jedenfalls nah-infraroten, Spektrums von kohärenten ultra-kurzen Lichtpulsen vorgesehen, dass die Fundamentale von einem Pump-Laser erzeugt ist, der ausgewählt ist aus der Gruppe von Lasern bestehend aus: Tm-Laser, wobei
- im Betrieb die Fundamentale in einem Wellenlängenbereich um von 2 µm liegt, und
- das zweite Signal-Licht und das zweite Idler-Licht des zweiten optischen parametrischen Verstärkers zusammen einen Durchstimmbarkeitsbereich von Wellenlängen zwischen 900 nm und 2 µm, insbesondere bis 3µm, gegebenenfalls sogar bis 20µm abdecken, wobei
- zwischen Wellenlängen im Durchstimmbarkeitsbereich durchgehend kontinuierlich durchgestimmt werden kann, insbesondere kontinuierlich durchgestimmt werden kann durch einen Degenerationsbereich des OPA bei der Pumpwellenlänge des Lasers.

Mit Vorteil ist vorgesehen, dass im Rahmen einer bevorzugten ersten Variante betreffend die Phasenanpassungs-Geometrie (oOPA)
- der erste optische parametrische Verstärker und/oder der zweite optische parametrische Verstärker in einer collinearen Phasenanpassungs-Geometrie (oOPA) betrieben werden, und/oder
- der erste optische parametrische Verstärker und/oder der zweite optische parametrische Verstärker einen nicht-linearen Kristall vom Typ-I, Typ-II oder Typ-0 (periodisch gepolt) aufweisen, insbesondere einen nicht-linearen Kristall aufweisen, der ausgewählt ist aus der Gruppe von Kristallen bestehend aus Kristallen der: BBO-, LBO-, KTP- oder LNBO3-Familie.

Insbesondere hat sich eine erste abgewandelte Weiterbildung als besonders bevorzugt erwiesen, bei welcher der erste optische parametrische Verstärker in einer kollinearen Phasenanpassungs-Geometrie (oOPA) betrieben wird und der erste optische parametrische Verstärker einen nicht-linearen Kristall vom Typ-I oder Typ-II oder Typ-0 aufweist. Insbesondere hat sich (vorzugsweise in Kombination mit der ersten abgewandelten Weiterbildung) eine zweite abgewandelte Weiterbildung als besonders bevorzugt erwiesen, bei welcher der zweite optische parametrische Verstärker (auch) in einer kollinearen Phasenanpassungs-Geometrie (oOPA) betrieben wird und der zweite optische parametrische Verstärker einen nicht-linearen Kristall vom Typ-II aufweist. Die letztgenannte Einschränkung des zweiten optischen parametrischen Verstärkers auf einen nicht-linearen Kristall vom Typ-II gewährleistet eine stabile Durchstimmbarkeit durch den Degenerationspunkt zwischen Signal- und Idler-Wellenlänge. Insgesamt zeigt sich, dass im Rahmen dieser abgewandelten Weiterbildungen Dispersionsprobleme geringer sind und die Pulsstabilität sowie Handhabbarkeit des Systems besser ist.

Mit Vorteil ist vorgesehen, dass im Rahmen einer anderen ersten Variante Phasenanpassungs-Geometrie (oOPA), dass
- der erste optische parametrische Verstärker und/oder der zweite optische parametrische Verstärker in einer nicht-kollinearen Phasenanpassungs-Geometrie (nOPA) betrieben werden, und/oder
- der erste optische parametrische Verstärker und/oder der zweite optische parametrische Verstärker einen nicht-linearen Kristall vom Typ-I, Typ-II oder Typ-0 (periodisch gepolt) aufweisen, insbesondere einen nicht-linearen Kristall aufweisen, der ausgewählt ist aus der Gruppe von Kristallen bestehend aus Kristallen der: BBO-, LBO-, KTP- oder LNBO3-Familie. Es zeigt sich, dass im Rahmen dieser Weiterbildung die erreichbaren Pulslängen kürzer sind.

Mit Vorteil ist vorgesehen, dass im Rahmen einer bevorzugten zweiten Variante betreffend eine Pumpgeometrie, dass im Betrieb die erste Weißlicht-Erzeugung und der erste optische parametrische Verstärker von einer Fundamentalen eines Lasers gepumpt werden, die in einem optischen Aufbau aus der Harmonischen-Erzeugung, insbesondere Frequenzverdoppelung, entnommen wird, insbesondere die Fundamentale eines Lasers in Transmission hinter der Harmonischen-Erzeugung, insbesondere Frequenzverdoppelung, entnommen wird. Dies hat den Vorteil, dass die zur Verfügung stehende PumpEnergie des Pumplasers besser genutzt werden kann und wird insbesondere relevant wenn weniger günstige Bedingungen bestehen; eine effiziente Nutzung der zur Verfügung stehenden Pumpenergie wird darüber gewährleistet.

Mit Vorteil ist vorgesehen, dass im Rahmen einer anderen zweiten Variante betreffend eine Pumpgeometrie im Betrieb die erste Weißlicht-Erzeugung und der erste optische parametrische Verstärker von einer Fundamentalen des OPA bei der Pumpwellenlänge eines Lasers gepumpt werden, die in einem optischen Aufbau direkt aus dem Laser entnommen wird, insbesondere die Harmonischen-Erzeugung, insbesondere Frequenzverdoppelung, in einem Seitenarm der Fundamentalen angeordnet ist.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:

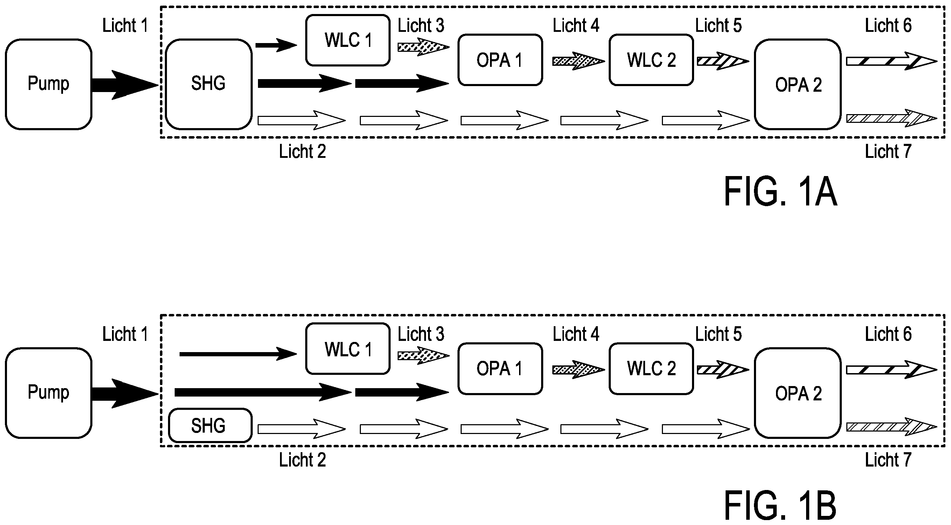

- Fig.1A und 1B: eine schematische Übersicht über eine optische Verstärkeranordnung von optischen parametrischen Verstärkern und Weißlicht-Erzeugungen sowie einer Harmonischen-Erzeugung, nämlich hier einer Frequenzverdoppelung, zur Erzeugung eines breiten sichtbar bis infraroten, jedenfalls nah-infraroten, Spektrums von kohärenten ultra-kurzen Lichtpulsen, vorliegend als Laserverstärkersystem mit einem Pump-Laser - in Ansicht (A) ist eine Ausführungsform gemäß der oben genannten bevorzugten zweiten Variante betreffend eine Pumpgeometrie gezeigt, bei welcher die fundamentale des Pump-Lasers in Transmission hinter der Harmonischen-Erzeugung, nämlich hier einer Frequenzverdoppelung, entnommen wird und in Ansicht (B) ist eine Ausführungsform gemäß der vorgenannten anderen zweiten Variante betreffend eine Pumpgeometrie gezeigt, bei welcher die Fundamentale des Lasers direkt aus dem Laser, das heißt aus einem Seitenarm der Harmonischen-Erzeugung zum Pumpen der Weißlicht-Erzeugung beziehungsweise des OPA genutzt wird;
- Fig.2: eine tabellarische Übersicht für die mit den Abkürzungen verbundenen optischen Erzeugern und deren bevorzugter Eigenschaften;
- Fig.3A und 3B: eine schematische Übersicht eines konkreten optischen Aufbaus der in Fig.1A gezeigten optischen Verstärkeranordnung;
- Fig.4A und 4B: eine schematische Darstellung einer optischen Verstärkeranordnung gemäß der oben genannten anderen zweiten Variante betreffend eine Pumpgeometrie, bei welcher die Harmonischen-Erzeugung (SHG) in einem Seitenarm der Fundamentalen des OPA bei der Pumpwellenlänge angeordnet ist.

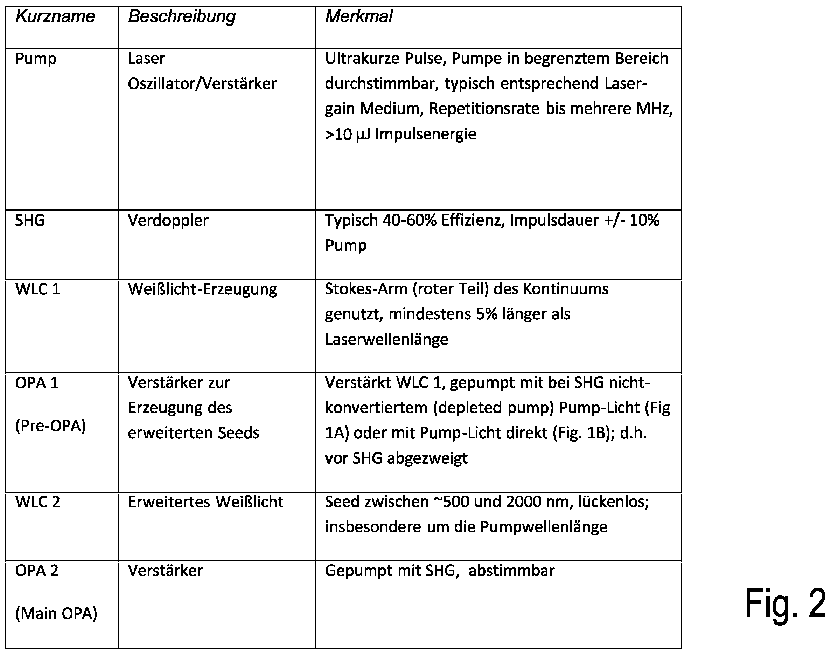

Bezugnehmend insbesondere auf Fig.1A, Fig.1B und Fig.2 werden vorliegend die einzelnen Strahlungserzeuger beschrieben.

### Pumplaser

Zum Pumpen des OPA wird bevorzugt aber nicht notwendigerweise ein Laser-System mit "chirped pulse amplification" (CPA) Technik eingesetzt mit der Wellenlänge von ca. 1000 nm (typischerweise zwischen 1020 und 1064 nm), entweder auf Basis von Faserlasern, Freistrahl-Systemen oder einer Kombination beider Möglichkeiten erzeugt werden. Die anvisierte Klasse von Geräten ist flexibel in der Wahl von Wiederholrate (Einzelschuss - einige MHz) und Impulsenergie (1 µJ und mehr, insbesondere 10 µJ - 10 mJ). Da die Kompression der Laser-Impulse wegen der hohen Spitzenleistung nicht innerhalb einer Faser geschehen kann, haben sämtliche möglichen Lasersysteme (einschließlich von Faserlasern) dieser Art einen Freistrahlausgang. Vorteilhaft für den Betrieb des OPA ist eine möglichst geringe Pulsdauer aufgrund der zugrunde liegenden nicht-linearen Prozesse. Das vorliegende Konzept erweist sich jedoch auch als erfolgreich bei etwas "längeren" ultra-kurzen Pulsen mit einer Pulsdauer (Pulslänge) oberhalb von 100 fs, insbesondere oberhalb von 150 fs, insbesondere oberhalb von 350 fs, insbesondere oberhalb von 500 fs oder oberhalb von 1ps und/oder unterhalb von 2 ps um die weiter unten beschriebene Methode der Seed-Erzeugung zu gewährleisten. (Licht_1) Bei Verwendung von längeren Pulsen findet die spektrale Verbreiterung nicht oder nicht effizient genug statt und es kommt eher zur Beschädigung des nichtlinearen Materials in WLC 1.

### Harmonischen-Erzeugung, insbesondere Frequenzverdoppelung - SHG

Der OPA hat als erstes entscheidendes Element eine effiziente Verdopplung -ggfs. auch Verdreifachung oder Vervierfachung oder sonstige Harmonische-- der eingekoppelten Pumpstrahlung (Umwandlung Licht_1 in Licht_2). Impulsdauer und Strahlqualität bleiben hierbei weitgehend identisch (siehe Tabelle). Die Verdopplung findet in einem nichtlinearen Kristall unter Einhaltung der Phasenanpassung statt (entweder nichtkritische Phasenanpassung oder Quasi-Phase-Matching). Um nichtkritische PM zu erreichen muss der Kristall erwärmt werden und wird dazu in einem Ofen unterbracht oder aber es wird eine an sich bekannte Fächerstruktur (FAN-out-Struktur) mit unterschiedlichen Polungen genutzt.

### WLC 1

Um für den pre-OPA (OPA1) Seed-Strahlung (Licht_3) zur Verfügung zu stellen, wird ein Teil (∼1µJ) des Pumplichts (Licht_1) in einen Festkörper fokussiert. Dies ist im Allgemeinen ein typisches Lasermaterial wie YAG, kann aber auch z.B. YVO4, GdVO4, GGG, Saphir oder eines der vielen anderen Materialien, bevorzugt undotierte Kristalle, sein, die bei diesen Leistungen keine Zerstörung zeigen. Wie weiter oben schon beschrieben, ist eine Pulsdauer oberhalb von 100fs möglich, jedoch von weniger als ∼2 ps sinnvoll, um die notwendige spektrale Verbreiterung zu erzielen. Die wichtigen Punkte neben der hohen Zerstörschwelle ist die Erzeugung eines möglichst breiten Superkontinuums ("super continuum generation", auch: "white-light generation") mit hoher Effizienz (spektrale Leistungsdichte) und zeitlicher sowie räumlicher Kohärenz. Es muss dabei eine gewisse Intensitätsschwelle von Licht_1 erreicht werden. Diese hängt von Wellenlänge, Pulsdauer, Strahlqualität und Fokusparametern von Licht_1 sowie vom verwendeten Material in WLC 1 ab.

Das Verfahren zur Erzeugung von Seed-Licht auf diese Weise hat sich als wichtige Technologie beim Bau von abstimmbaren OPAs erwiesen. Unterscheidungen in dem Verfahren sind meist nur auf die Auswahl des Materials beschränkt --in den ersten Veröffentlichungen Saphir, heutzutage meist YAG-- oder auf die Wahl der StrahlparameterFokussierung, Strahlgrößen--. Wichtig ist das Vorhandensein von ausreichend spektraler Leistungsdichte (W/nm) im notwendigen Wellenlängenbereich - als Beispiel bei WLC1: zwischen 1600 und 2000 nm.

Dieser Teil muss grundsätzlich jedenfalls nicht durch den Pumplaser selbst erzeugt werden, sondern kann auch durch eine externe Quelle (Laserdiode, Festkörperlaser) erfolgen bei einer Wellenlänge in diesem Bereich; allerdings ist dann ist ein solcher OPA nicht mehr Wellenlängen-abstimmbar.

### OPA 1

In einem weiteren nichtlinearen Kristall wird das Seed-Licht (Licht_3, z.B. 1600-2000 nm) mit der Pumpe (Licht_1, hier: 1030 nm) kombiniert und verstärkt. Dieser Kristall ist der OPA 1, (in unserer Notation: "pre-OPA"), der der der Verstärkung des Seeds aus WLC1 dient. Es handelt sich um einen nichtlinearen Kristall, der durch die unkonvertierte Pumpe betrieben wird (z.B. Pumpe (1030nm) □□Signal (1600nm) + Idler (2900nm)). Neben der Phasenanpassung muss eine hohe Zerstörschwelle des Materials gewährleistet sein. Die Effizienz dieses Prozesses muss hoch genug gewählt werden, um im späteren Strahlengang den zweiten Prozess der Seed-Erzeugung (aus Licht_4 wird Licht_5 erzeugt) zu ermöglichen. Ähnlich wie in WLC 1 muss eine gewisse Intensitätsschwelle, die im Genauen von Wellenlänge, Pulsdauer und Strahlqualität von Licht_4 abhängt, erreicht werden, da ansonsten keine spektrale Verbreiterung stattfindet. Es muss wiederum eine Bandbreite erzeugt werden, die die Erzeugung eines Femtosekundenpulses ermöglicht, was aber bei Verwendung eines fs-Pulses in Licht_1 automatisch gewährleistet ist.

### WLC 2

Hier wird der erweiterte Seed für die nachfolgende OPA-Stufe (OPA 2, main-OPA) durch spektrale Verbreiterung durch Filamentierung erzeugt. Genutzt wird Licht_4, das im OPA 1 erzeugt wurde. Bei Überschreiten einer Intensitätsschwelle, die von den Materialparametern abhängt (Stichwort: kritische Leistung, "critical power"), findet, analog zu WLC 1, die Erzeugung eines Superkontinuums (Licht_5) statt - ein Prozess, der hauptsächlich auf dem Prinzip der Selbstphasenmodulation (self phase modulation, SPM) beruht. Genau wie im WLC 1 ist dieses Licht von hoher zeitlicher und spektraler Kohärenz und von sehr hoher Strahlqualität (Fokussierbarkeit). Die untere Schwelle zum Erreichen der hohen spektralen Verbreiterung beträgt etwa das Vierfache der kritischen Leistung, die eine Materialeigenschaft ist. Leichte Beeinflussung dieser unteren Schwelle ist durch Wahl der Fokussierung (numerische Apertur, numerical aperture, NA) des eintreffenden Laserstrahls möglich, sowie durch dessen Strahlqualität (M2 - Wert des Strahls, Fokussierbarkeit). Wiederum hängt es vom jeweiligen Material ab, wie groß die obere Schwelle ist, im Allgemeinen ist sie jedoch ca. 2-4x höher als die entsprechende untere Schwelle.

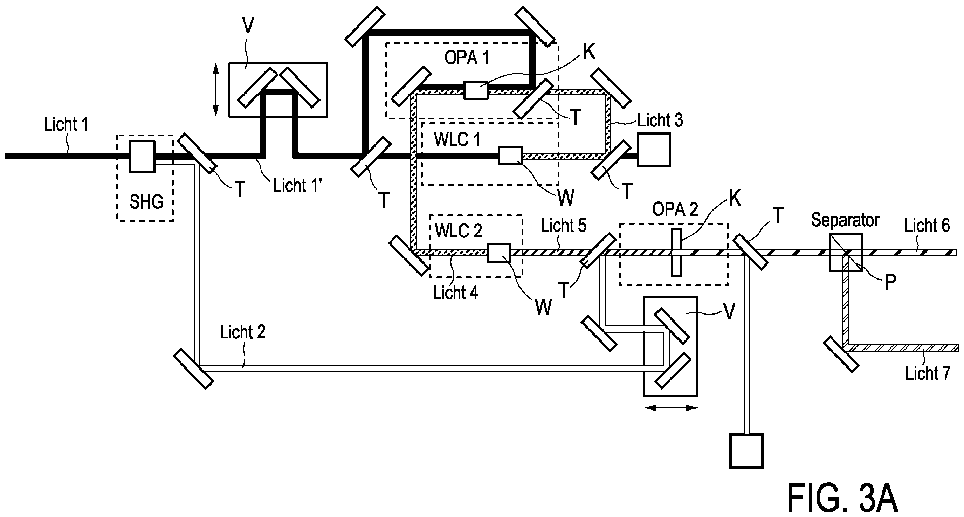

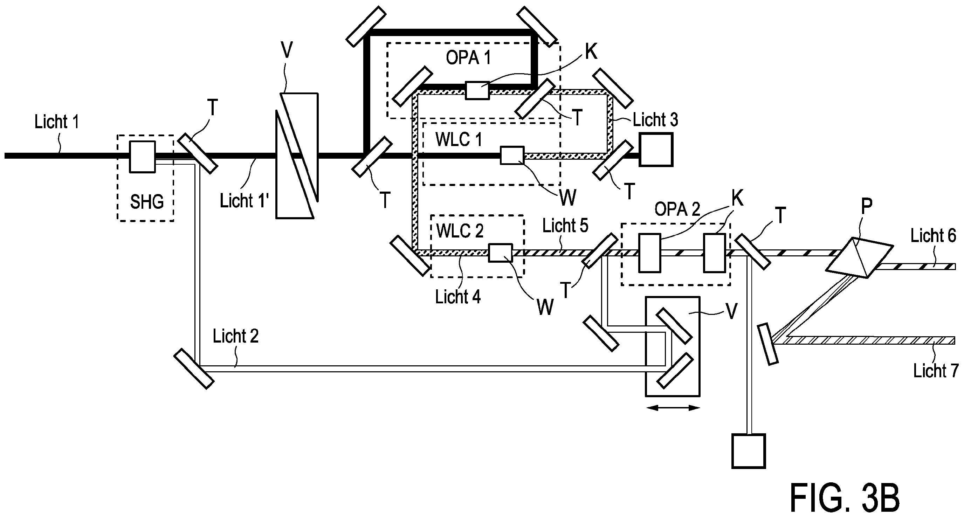

Das zur spektralen Verbreiterung verwendete Licht_4 (z. B. 1600 nm) hat dabei eine größere Wellenlänge als Licht_1 (z.B. 1030 nm), welches im klassischen Ansatz der Seed-Erzeugung (in kommerziellen OPA) genutzt wird. Licht_5 erstreckt sich lückenlos im Wellenlängenbereich zwischen der Wellenlänge von Licht_4 und der Untergrenze der OPA-Verstärkungsbandbreite (dieses breite Spektrum wird in FIG.1 und Fig.3 als Licht_6 bezeichnet) beispielsweise von etwa 620 nm im Falle von ca. 515 nm als Wellenlänge von Licht_2.

Bei Verwendung des pre-OPA Idler als Licht_4 hat das Seed-Licht (Licht_5) die Eigenschaft, dass Trägerfrequenz und Einhüllende des Pulses eine konstante Phasenbeziehung zueinander haben (CEP-Stabilität).

### OPA 2

Dieser OPA wird durch die zweite Harmonische des Pumplasers gepumpt (hier: 515 nm, Licht_2) und besteht im Wesentlichen aus einem oder mehreren BBO-Kristallen. Andere nichtlineare Kristalle sind auch denkbar, insbesondere ein nicht-linearer Kristall, der ausgewählt ist aus der Gruppe von Kristallen bestehend aus Kristallen der: BBO-, LBO-, KTP- oder LNBO3-Familie. Wegen der großen verfügbaren Bandbreite des Seeds ist dieser OPA im Bereich zwischen der Untergrenze der Kristall-Verstärkungsbandbreite (hier für BBO: -620 nm) und der Wellenlänge von Licht_4 (hier etwa 1600 bis 2500nm lückenlos durchstimmbar. Der entsprechende Idler gestattet das Abdecken des Wellenlängenbereichs zwischen der Transmissionsgrenze des Verstärkerkristalls (hier für BBO, ∼2600nm) bis zur komplementären Idlerwellenlänge, die sich bei Verstärkung von Licht_4 (hier ca. 760nm) ergibt. Beide Ausgänge des OPA (Licht_6 und Licht_7) überschneiden sich also prinzipiell in ihrem Abstimmbereich (aber nicht notwendigerweise gleichzeitig). So kann eine lückenlose Durchstimmbarkeit zwischen 550nm und 3µm erreicht werden. Bei der Verwendung eines anderen Kristalls --insbesondere eines nicht-linearen Kristalls, der ausgewählt ist aus der Gruppe von Kristallen bestehend aus Kristallen der: BBO-, LBO-, KTP- oder LNBO3-Familie-- kann im Prinzip sogar eine lückenlose Durchstimmbarkeit zwischen 500nm und 5µm erreicht werden. Die Separation von Licht_6 und Licht_7 erfolgt entweder durch ein polarisations-sensitives Element oder einen dichroitischen Spiegel.

Die vorgenannten optischen Erzeuger lassen sich im Rahmen eines optischen Aufbaus derart optisch koppeln, dass im Betrieb der erste optische parametrische Verstärker von der ersten Weißlicht-Erzeugung geseedet, und der zweite optische parametrische Verstärker von der zweiten Weißlicht-Erzeugung geseedet, wird und wobei im Betrieb die erste Weißlicht-Erzeugung und der erste optische parametrische Verstärker und die Harmonischen-Erzeugung, insbesondere Frequenzverdoppelung, von einer Fundamentalen eines Lasers gepumpt werden; d.h. also wobei ein Seed des ersten optischen parametrischen Verstärkers mittels der ersten Weißlicht-Erzeugung erfolgt und die zweite Weißlicht-Erzeugung mittels dem ersten optischen parametrischen Verstärker erfolgt und der zweite optische parametrische Verstärker von einer zweiten oder höheren Harmonischen der Fundamentalen des Pump-Lasers gepumpt wird, wobei ein Seed des zweiten optischen parametrischen Verstärkers mittels der zweiten Weißlicht-Erzeugung erfolgt.

Bezugnehmend Fig.3A, Fig.3B, werden vorliegend die einzelnen Strahlungserzeuger im optischen Aufbau, d.h. in ihrer optischen Kopplung, beschrieben. Das dort als Licht_1 bezeichnete Pump-Laserlicht entstammt dem Pump-Laser, der in Fig.1A gezeigt ist - in dem optischen Aufbau sind zwei Verzögerungsstrecken V für ein Pumplicht (Licht_1 und Licht_2) realisiert, um zeitliche Verzögerungen der Pulse in den Pfaden der Strahlungsführung ausgleichen zu können. In der Ausführungsform der Fig.3A sind beide Verzögerungsstrecken mit einem Retroreflektor realisiert und in der Ausführungsform der Fig.3B ist eine der beiden Verzögerungsstrecken mit einem dispersiven Element --hier zwei transparente Keile vor dem OPA1 und WLC1-- und die andere der beiden Verzögerungsstrecken mit einem Retroreflektor --hier ein verfahrbarer Schlitten mit zwei Spiegeln vor dem OPA2-- realisiert.

Eine optische Kopplung der einzelnen optischen Einheiten, insbesondere Strahlungserzeuger, ist im Rahmen der zuvor beschriebenen und im Einzelnen in Fig.3A und Fig.3B gezeigten optischen Aufbauten realisierbar. Vorliegend ist der zweite optische Verstärker OPA2 als zweistufiger OPA ausgeführt, das heißt mit einem ersten und einem zweiten nicht-linearen Kristall K, die beide gezeigt sind. Die optischen Aufbauten umfassen eine Strahlungsführung mit einer geeigneten Zahl von Spiegeln S, Strahlteilern T - letztere Strahlteilern T auch als Polarisation sensitive Elemente P und/oder Wellenlänge sensitive Elemente (ersichtlich aus der Fig.) oder dergleichen. In den Strahlungserzeugern wird das Licht entsprechend in einen nicht-linearen Kristall K oder Weißlichtkristall W der oben beschriebenen Art fokussiert; dies mit geeigneter Fokussieroptik, die nicht im Einzelnen gezeigt ist.

Zu der Strahlungsführung gehört auch die in Fig.3A und Fig.3B gezeigten Verzögerungsstrecken V. In beiden Fällen ist dies vor dem OPA2 ein Schlitten oder sonstiges Verfahrelement mit einem Retro-Reflektor, der in der Lage ist, das aus der SHG entnommene Licht höherer Harmonischer (Licht_2), das heißt, die zugehörigen Pulse der SHG, zeitlich zu verzögern, sodass sie mit einem Seed-Puls aus WLC2 im OPA2 zeitlich überlappen und so den nicht-linearen Konversionsprozess zur Erzeugung des Idlers (Licht_6) und Signals (Licht_7) aus OPA2 etablieren.

Im Falle der Fig.3A ist dies vor dem OPA1 und WLC1 ebenfalls ein Schlitten oder sonstiges Verfahrelement mit einem Retro-Reflektor, der in der Lage ist, das aus dem Pumplaser entnommene Licht (Licht_1), das heißt, die zugehörigen Pulse der Fundamentalen, zeitlich zu verzögern. Im Falle der Fig.3B ist dies vor dem OPA1 und WLC1 ein dispersives Keilelement oder sonstiges verzögerndes optisch transparentes Element, das in der Lage ist, das aus dem Pumplaser entnommene Licht (Licht_1) --das heißt, die zugehörigen Pulse der Fundamentalen-- zeitlich zu verzögern und Dispersion bzw. spektrale räumliche Aufweitung wieder auszugleichen. Dies können beispielsweise die gezeigten gegeneinander gestellten Keile sein.

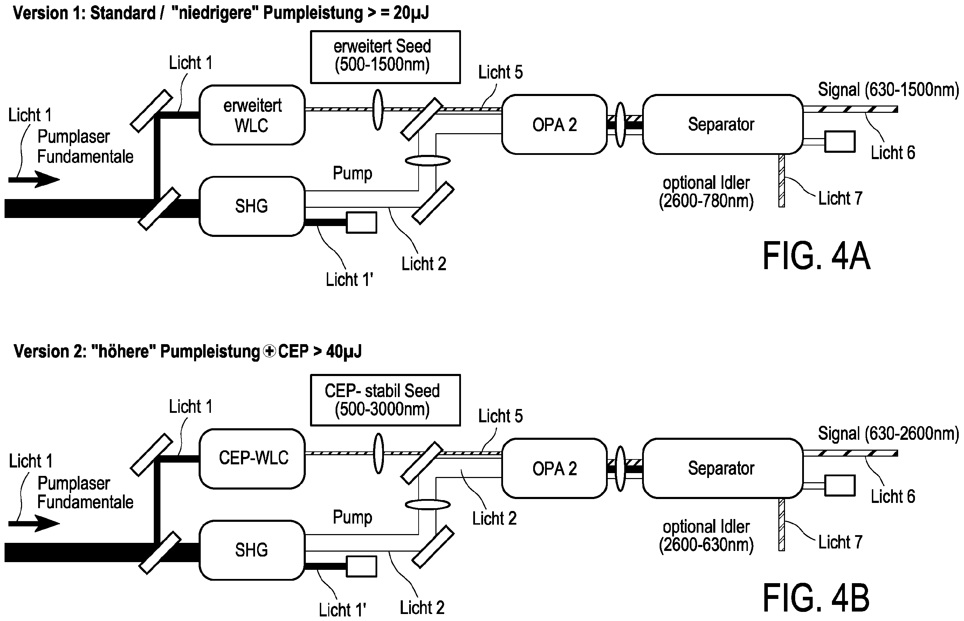

Fig.4 zeigt eine im Aufbau grundsätzlich abgewandelte Variante --gemäß der oben genannten zweiten Variante-- bei welcher die Harmonischen-Erzeugung, nämlich hier die Frequenzverdoppelung, SHG und die Weißlicht-Erzeugung in unterschiedlichen Seitenarmen getrennt sind, das heißt im Prinzip gemäß dem Schema der Ausführungsform der Fig.1B. Bezugnehmend Fig.4A und Fig.4B, wird das Pump-Laserlicht genutzt, um ein sogenanntes erweitertes Weißlicht zu erzeugen, nämlich wie in Fig.1B gezeigt ist, mittels WLC1 und OPA1 (hier bezeichnet als "erweitertes WLC" engl.: "Extended WLC", beziehungsweise CEP-stabiles WLC). Fig.4A zeigt dazu die Nutzung des Signalausgangs von OPA1 zur Erzeugung von Weißlicht in WLC2 als somit stabilere und damit niedrigere Pumpleistung, bevorzugt oberhalb 20µJ, bevorzugende Ausführungsform. Fig.4B zeigt dazu die Nutzung des Idler-Ausgangs von OPA1 zur Erzeugung von Weißlicht in WLC2, um dort eine Carrier-Envelope-Phasenstabile Weißlicht-Erzeugung (CEP) zu erreichen als etwas instabilere und damit mehr Pumpleistung, bevorzugt oberhalb 40µJ, insbesondere oberhalb 100 µJ, , bevorzugende Ausführungsform.

Es zeigt sich, dass gemäß der Ausführungsform der Fig.4A die Verwendung des Signal-Lichts aus OPA1 zu einem besonders bevorzugten Seed-Licht zwischen 500 bis 1500 nm führt bei Pumpleistungen im Bereich von 20 µJ oder etwas mehr.

Fig.4B zeigt eine abgewandelte Ausführungsform mittels der Carrier-Envelope-Phasenstabile Pulse (CEP-Pulse) mit deutlich höheren Anforderungen an die Pumpenergien, bevorzugt oberhalb von 40 µJ; - dies setzt die Nutzung eines Idler-Lichts aus OPA1 zur Erzeugung von WLC2 voraus.

Die Vorteile der in Fig.4A genannten Ausführungsformen liegen vor allem in der Durchstimmbarkeit durch den Degenerationspunkt und einem möglichen einzelnen Ausgangsport für ein Signal aus OPA2 mit Licht_6 im Bereich der Wellenlängen 630 nm bis 1500 nm. Optional kann der Idler-Ausgang von Licht_7 aus OPA2 mit einem Wellenlängenbereich von 780 bis 2600 nm genutzt werden. Der Vorteil liegt auch darin, dass eine separate Harmonischen-Erzeugung, nämlich hier die Frequenzverdoppelung, also mittels hier einer Second-Harmonic-Generation (SHG) in einem Seitenarm angeordnet werden kann. Bei Nutzung einer vierfachen Harmonischen (FHG) kann ein Degenerationspunkt freier Durchstimmbarkeit bis hinunter zu 210 nm erreicht werden.

Der Vorteil einer in Fig.4B gezeigten Ausführungsform liegt darin, dass ebenfalls eine Durchstimmbarkeit über den Degenerationspunkt erreichbar ist, wobei die Signal-Wellenlängen aus OPA2 (Licht_6) im Bereich zwischen 630 bis 2600 nm liegen beziehungsweise entsprechend unter Nutzung des Idler-Ausgangs - alle dort generierten Pulse sind Carrier-Envelope-Phasenstabil was sich aufgrund der intrinsischen CEPstabilen Signalpulse ergibt (wie zuvor erläutert). Auch hier ist eine Möglichkeit, das generierte Licht aus OPA2 über einen einzigen Ausgang auszukoppeln. Sowohl bei der Ausführungsform der Fig.4A als auch bei der Ausführungsform der Fig.4B lässt sich dies vor allem durch eine kollineare Ausführung des OPA2 (oOPA) im Unterschied zu einer nicht-kollinearen Anordnung (nOPA) erreichen. Auch hier lässt sich mit einer einfachen Frequenzverdopplung (SHG) ersetzt durch eine vierfache Harmonische (FHG) eine degenerationspunktfreie Durchstimmbarkeit bis hinunter zu 210 nm erreichen.

## Patentansprüche

1. Optische Verstärker-Anordnung von optischen parametrischen Verstärkern und Weißlicht-Erzeugungen und einer Harmonischen-Erzeugung, insbesondere Frequenzverdoppelung, zur Erzeugung eines breiten sichtbar bis infraroten, jedenfalls nah-infraroten, Spektrums von kohärenten ultra-kurzen Lichtpulsen, insbesondere mit einem Pump-Laser, aufweisend:
- eine erste Weißlicht-Erzeugung und einen ersten optischen parametrischen Verstärker zur Erzeugung eines ersten Signal-Lichts und eines ersten Idler-Lichts sowie eine zweite Weißlicht-Erzeugung und einen zweiten optischen parametrischen Verstärker zur Erzeugung eines zweiten Signal-Lichts und eines zweiten Idler-Lichts und die Harmonischen-Erzeugung, die derart optisch gekoppelt sind, dass
- im Betrieb der erste optische parametrische Verstärker von der ersten Weißlicht-Erzeugung gepumpt und der zweite optische parametrische Verstärker von der zweiten Weißlicht-Erzeugung gepumpt wird, und wobei im Betrieb
- die erste Weißlicht-Erzeugung und der erste optische parametrische Verstärker und die Harmonischen-Erzeugung von einer Fundamentalen eines Lasers gepumpt werden, wobei ein Seed des ersten optischen parametrischen Verstärkers mittels der ersten Weißlicht-Erzeugung erfolgt, und
- die zweite Weißlicht-Erzeugung mittels dem ersten optischen parametrischen Verstärker erfolgt und der zweite optische parametrische Verstärker von einer zweiten oder höheren Harmonischen der Fundamentalen des Pump-Lasers gepumpt wird, wobei ein Seed des zweiten optischen parametrischen Verstärkers mittels der zweiten Weißlicht-Erzeugung erfolgt,
**dadurch gekennzeichnet, dass**
- im Betrieb die Fundamentale in einem Wellenlängenbereich oberhalb von 950nm liegt, und
- das zweite Signal-Licht und das zweite Idler-Licht des zweiten optischen parametrischen Verstärkers zusammen einen Durchstimmbarkeitsbereich von Wellenlängen zwischen 500nm und 5µm, insbesondere zwischen 550nm und 3µm, abdecken, wobei
- zwischen Wellenlängen im Durchstimmbarkeitsbereich durchgehend kontinuierlich durchgestimmt werden kann, nämlich kontinuierlich durchgestimmt werden kann durch einen Degenerationsbereich des zweiten optischen parametrischen Verstärkers (OPA2) bei der Fundamentalen des Pump-Lasers.

2. Verstärker-Anordnung nach Anspruch 1, **dadurch gekennzeichnet, dass**
- die zweite Weißlicht-Erzeugung mittels des ersten Signallichtes des ersten optischen parametrischen Verstärkers erfolgt.

3. Verstärker-Anordnung nach Anspruch 1 oder 2, **dadurch gekennzeichnet, dass**
- wenigstens die erste Weißlicht-Erzeugung und der erste optische parametrische Verstärker sowie die Harmonischen-Erzeugung, insbesondere Frequenzverdoppelung, ausgebildet sind, von einem Laser gepumpt zu werden, der
- die Fundamentale in einem Wellenlängenbereich oberhalb von 950nm, insbesondere knapp oberhalb von 1 µm, oder oberhalb von 1850 nm, insbesondere oberhalb 2 µm, liefert, und
- mit einer Pulsenergie unterhalb von 300 µJ, insbesondere unterhalb von 100µJ, und/oder
- mit einer Repetitionsrate oberhalb von 50 kHz, insbesondere oberhalb von 100 kHz, und/oder
- mit einer Pulsdauer oberhalb von 100 fs, insbesondere oberhalb von 150 fs, insbesondere oberhalb von 350 fs, insbesondere oberhalb von 500 fs oder oberhalb von 1 ps und/oder unterhalb von 2 ps.

4. Verstärker-Anordnung nach Anspruch 1 oder 2, **dadurch gekennzeichnet, dass**
- die Fundamentale von einem Pump-Laser erzeugt ist, der ausgewählt ist aus der Gruppe von Lasern bestehend aus: Yb-Laser, Er-Laser, Nd -Laser, wobei
- im Betrieb die Fundamentale in einem Wellenlängenbereich oberhalb von 950 nm liegt, insbesondere knapp oberhalb von 1 µm liegt, und
- das zweite Signal-Licht und das zweite Idler-Licht des zweiten optischen parametrischen Verstärkers zusammen einen Durchstimmbarkeitsbereich von Wellenlängen zwischen 500nm und 5µm, insbesondere zwischen 550nm und 3µm, vorzugsweise zwischen 630nm und 2,5µm abdecken, wobei
- zwischen Wellenlängen im Durchstimmbarkeitsbereich durchgehend kontinuierlich durchgestimmt werden kann, nämlich kontinuierlich durchgestimmt werden kann durch den Degenerationsbereich des OPO bei der Laserwellenlänge.

5. Verstärker-Anordnung nach Anspruch 1 oder 2, **dadurch gekennzeichnet, dass** die Fundamentale von einem Pump-Laser erzeugt ist, der ausgewählt ist aus der Gruppe von Lasern bestehend aus: Tm-Laser, wobei
- im Betrieb die Fundamentale in einem Wellenlängenbereich um 2 µm liegt, und
- das zweite Signal-Licht und das zweite Idler-Licht des zweiten optischen parametrischen Verstärkers zusammen einen Durchstimmbarkeitsbereich von Wellenlängen zwischen 900 nm und 20 µm abdecken, wobei
- zwischen Wellenlängen im Durchstimmbarkeitsbereich durchgehend kontinuierlich durchgestimmt werden kann, nämlich kontinuierlich durchgestimmt werden kann durch den Degenerationsbereich des OPO bei der Laserwellenlänge.

6. Verstärker-Anordnung nach einem der Ansprüche 1 bis 5, **dadurch gekennzeichnet, dass** das erste Signallicht des ersten optischen parametrischen Verstärkers, insbesondere die zweite Weißlicht-Erzeugung, bei Wellenlängen in einem Bereich erzeugt wird, die wenigstens bis zu 5% länger sind als die Fundamentale des Pump-Lasers.

7. Verstärker-Anordnung nach einem der Ansprüche 1 bis 6, **dadurch gekennzeichnet, dass**
- der erste optische parametrische Verstärker und/oder der zweite optische parametrische Verstärker in einer kollinearen Phasenanpassungs-Geometrie (OPA) betrieben werden, und/oder
- der erste optische parametrische Verstärker und/oder der zweite optische parametrische Verstärker einen nicht-linearen Kristall vom Typ-I, Typ-II oder Typ-0 aufweisen, insbesondere einen nicht-linearen Kristall aufweisen, der ausgewählt ist aus der Gruppe von Kristallen bestehend aus Kristallen der: BBO-, LBO-, KTP- oder LNBO3-Familie.

8. Verstärker-Anordnung nach einem der Ansprüche 1 bis 6, **dadurch gekennzeichnet, dass**
- der erste optische parametrische Verstärker und/oder der zweite optische parametrische Verstärker in einer nicht-kollinearen Phasenanpassungs-Geometrie (NOPA) betrieben werden, und/oder
- der erste optische parametrische Verstärker und/oder der zweite optische parametrische Verstärker einen nicht-linearen Kristall vom Typ-I, Typ-II oder Typ-0 aufweisen, insbesondere einen nicht-linearen Kristall aufweisen, der ausgewählt ist aus der Gruppe von Kristallen bestehend aus Kristallen der: BBO-, LBO-, KTP- oder LNBO3-Familie.

9. Verstärker-Anordnung nach einem der Ansprüche 1 bis 8, **dadurch gekennzeichnet, dass** im Betrieb die erste Weißlicht-Erzeugung und der erste optische parametrische Verstärker von einer Fundamentalen eines Lasers gepumpt werden, die in einem optischen Aufbau aus der Harmonischen-Erzeugung, insbesondere Frequenzverdoppelung, entnommen wird, insbesondere die Fundamentale eines Lasers in Transmission hinter der Harmonischen-Erzeugung entnommen wird.

10. Verstärker-Anordnung nach einem der Ansprüche 1 bis 8, **dadurch gekennzeichnet, dass** im Betrieb die erste Weißlicht-Erzeugung und der erste optische parametrische Verstärker von einer Fundamentalen eines Lasers gepumpt werden, die in einem optischen Aufbau direkt aus dem Laser entnommen wird, insbesondere die Harmonischen-Erzeugung, insbesondere Frequenzverdoppelung, in einem Seitenarm der Fundamentalen, vorzugsweise des Pump-Lasers, angeordnet ist.

11. Laser-Verstärker-System mit einer optischen Verstärker-Anordnung nach einem der Ansprüche 1 bis 10 und einem Pump-Laser.

12. Laser-Verstärker-System nach Anspruch 11, **dadurch gekennzeichnet, dass** der Pump-Laser ausgewählt ist aus der Gruppe von Lasern bestehend aus: Yb-Laser, Er-Laser, Nd -Laser, Tm-Laser.

13. Verfahren zur Erzeugung eines breiten sichtbar bis infraroten, jedenfalls nah-infraroten, Spektrums von kohärenten ultra-kurzen Lichtpulsen mit einer optischen Verstärker-Anordnung von optischen parametrischen Verstärkern und Weißlicht-Erzeugungen und einer Harmonischen-Erzeugung, insbesondere Frequenzverdoppelung, zur Erzeugung eines breiten sichtbar bis infraroten, jedenfalls nah-infraroten, Spektrums von kohärentem Licht, insbesondere mit einem Pump-Laser, insbesondere mit einer Optische-Verstärker-Anordnung nach einem der Ansprüche 1 bis 10 oder einem Laser-Verstärker-System nach Anspruch 11 oder 12, aufweisend:
- eine erste Weißlicht-Erzeugung und einen ersten optischen parametrischen Verstärker zur Erzeugung eines ersten Signal-Lichts und eines ersten Idler-Lichts sowie eine zweite Weißlicht-Erzeugung und einen zweiten optischen parametrischen Verstärker zur Erzeugung eines zweiten Signal-Lichts und eines zweiten Idler-Lichts und die Harmonischen-Erzeugung, die derart optisch gekoppelt sind, dass
- im Betrieb der erste optische parametrische Verstärker von der ersten Weißlicht-Erzeugung gepumpt und der zweite optische parametrische Verstärker von der zweiten Weißlicht-Erzeugung gepumpt wird, und wobei im Betrieb
- die erste Weißlicht-Erzeugung und der erste optische parametrische Verstärker und die Harmonischen-Erzeugung von einer Fundamentalen eines Lasers gepumpt werden, wobei ein Seed des ersten optischen parametrischen Verstärkers mittels der ersten Weißlicht-Erzeugung erfolgt, und
- die zweite Weißlicht-Erzeugung mittels dem ersten optischen parametrischen Verstärker erfolgt und der zweite optische parametrische Verstärker von einer zweiten oder höheren Harmonischen der Fundamentalen des Pump-Lasers gepumpt wird, wobei ein Seed des zweiten optischen parametrischen Verstärkers mittels der zweiten Weißlicht-Erzeugung erfolgt,
**dadurch gekennzeichnet, dass**
- im Betrieb die Fundamentale in einem Wellenlängenbereich oberhalb von 950nm liegt, und
- das zweite Signal-Licht und das zweite Idler-Licht des zweiten optischen parametrischen Verstärkers zusammen einen Durchstimmbarkeitsbereich von Wellenlängen zwischen 500nm und 5µm, insbesondere zwischen 550nm und 3µm, abdecken, wobei
- zwischen Wellenlängen im Durchstimmbarkeitsbereich durchgehend kontinuierlich durchgestimmt werden kann, nämlich kontinuierlich durchgestimmt werden kann durch den Degenerationsbereich des zweiten optischen parametrischen Verstärkers (OPA2) bei der Fundamentalen des Pump-Lasers.

## Claims

1. Optical amplifier arrangement of optical parametric amplifiers and white light generations and a harmonic generation, in particular frequency doubling, for generating a broad visible to infrared, in any case near-infrared, spectrum of coherent ultra-short light pulses, in particular with a pump laser, comprising:
- a first white light generation and a first optical parametric amplifier for generating a first signal light and a first idler light and also a second white light generation and a second optical parametric amplifier for generating a second signal light and a second idler light and the harmonic generation, which are optically coupled in such a way that
- during operation the first optical parametric amplifier is pumped by the first white light generation and the second optical parametric amplifier is pumped by the second white light generation, and wherein during operation
- the first white light generation and the first optical parametric amplifier and the harmonic generation are pumped by a fundamental of a laser, wherein a seeding of the first optical parametric amplifier takes place by means of the first white light generation, and
- the second white light generation takes place by means of the first optical parametric amplifier and the second optical parametric amplifier is pumped by a second or higher harmonic of the fundamental of the pump laser, wherein a seeding of the second optical parametric amplifier takes place by means of the second white light generation,
**characterized in that**
- during operation the fundamental lies in a wavelength range above 950 nm, and
- the second signal light and the second idler light of the second optical parametric amplifier together cover a tunability range of wavelengths between 500 nm and 5 µm, in particular between 550 nm and 3 µm, wherein
- tuning can be carried out continuously between wavelengths in the tunability range, namely tuning can be carried out continuously through a degeneration range of the second optical parametric amplifier (OPA2) at the fundamental of the pump laser.

2. Amplifier arrangement according to claim 1, **characterized in that**
- the second white light generation takes place by means of the first signal light of the first optical parametric amplifier.

3. Amplifier arrangement according to claim 1 or 2, **characterized in that**
- at least the first white light generation and the first optical parametric amplifier and also the harmonic generation, in particular frequency doubling, are designed to be pumped by a laser which
- delivers the fundamental in a wavelength range above 950 nm, in particular just above 1 µm, or above 1850 nm, in particular above 2 µm, and
- with a pulse energy below 300 µJ, in particular below 100 µJ, and/or
- with a repetition rate above 50 kHz, in particular above 100 kHz, and/or
- with a pulse duration above 100 fs, in particular above 150 fs, in particular above 350 fs, in particular above 500 fs or above 1 ps and/or below 2 ps.

4. Amplifier arrangement according to claim 1 or 2, **characterized in that**
- the fundamental is generated by a pump laser which is selected from the group of lasers consisting of: Yb laser, Er laser, Nd laser, wherein
- during operation the fundamental lies in a wavelength range above 950 nm, in particular just above 1 µm, and
- the second signal light and the second idler light of the second optical parametric amplifier together cover a tunability range of wavelengths between 500 nm and 5 µm, in particular between 550 nm and 3 µm, preferably between 630 nm and 2.5 µm, wherein
- tuning can be carried out continuously between wavelengths in the tunability range, namely tuning can be carried out continuously through the degeneration range of the OPO at the laser wavelength.

5. Amplifier arrangement according to claim 1 or 2, **characterized in that** the fundamental is generated by a pump laser which is selected from the group of lasers consisting of: Tm laser, wherein
- during operation the fundamental lies in a wavelength range around 2 µm, and
- the second signal light and the second idler light of the second optical parametric amplifier together cover a tunability range of wavelengths between 900 nm and 20 µm, wherein
- tuning can be carried out continuously between wavelengths in the tunability range, namely tuning can be carried out continuously through the degeneration range of the OPO at the laser wavelength.

6. Amplifier arrangement according to one of claims 1 to 5, **characterized in that** the first signal light of the first optical parametric amplifier, in particular the second white light generation, is generated at wavelengths in a range which are at least up to 5% longer than the fundamental of the pump laser.

7. Amplifier arrangement according to one of claims 1 to 6, **characterized in that**
- the first optical parametric amplifier and/or the second optical parametric amplifier are operated in a collinear phase matching geometry (OPA), and/or
- the first optical parametric amplifier and/or the second optical parametric amplifier have a non-linear crystal of type I, type II or type 0, in particular have a non-linear crystal which is selected from the group of crystals consisting of crystals of the: BBO, LBO, KTP or LNBO3 family.

8. Amplifier arrangement according to one of claims 1 to 6, **characterized in that**
- the first optical parametric amplifier and/or the second optical parametric amplifier are operated in a non-collinear phase matching geometry (NOPA), and/or
- the first optical parametric amplifier and/or the second optical parametric amplifier have a non-linear crystal of type I, type II or type 0, in particular have a non-linear crystal which is selected from the group of crystals consisting of crystals of the: BBO, LBO, KTP or LNBO3 family.

9. Amplifier arrangement according to one of claims 1 to 8, **characterized in that** during operation the first white light generation and the first optical parametric amplifier are pumped by a fundamental of a laser which is drawn in an optical set-up from the harmonic generation, in particular frequency doubling, in particular the fundamental of a laser is drawn in transmission downstream of the harmonic generation.

10. Amplifier arrangement according to one of claims 1 to 8, **characterized in that** during operation the first white light generation and the first optical parametric amplifier are pumped by a fundamental of a laser which is drawn in an optical set-up directly from the laser, in particular the harmonic generation, in particular frequency doubling, is arranged in a side arm of the fundamental, preferably of the pump laser.

11. Laser amplifier system comprising an optical amplifier arrangement according to one of claims 1 to 10 and a pump laser.

12. Laser amplifier system according to claim 11, **characterized in that** the pump laser is selected from the group of lasers consisting of: Yb laser, Er laser, Nd laser, Tm laser.

13. Method for generating a broad visible to infrared, in any case near-infrared, spectrum of coherent ultra-short light pulses with an optical amplifier arrangement of optical parametric amplifiers and white light generations and a harmonic generation, in particular frequency doubling, for generating a broad visible to infrared, in any case near-infrared, spectrum of coherent light, in particular with a pump laser, in particular with an optical amplifier arrangement according to one of claims 1 to 10 or a laser amplifier system according to claim 11 or 12, comprising:
- a first white light generation and a first optical parametric amplifier for generating a first signal light and a first idler light and also a second white light generation and a second optical parametric amplifier for generating a second signal light and a second idler light and the harmonic generation, which are optically coupled in such a way that
- during operation the first optical parametric amplifier is pumped by the first white light generation and the second optical parametric amplifier is pumped by the second white light generation, and wherein during operation
- the first white light generation and the first optical parametric amplifier and the harmonic generation are pumped by a fundamental of a laser, wherein a seeding of the first optical parametric amplifier takes place by means of the first white light generation, and
- the second white light generation takes place by means of the first optical parametric amplifier and the second optical parametric amplifier is pumped by a second or higher harmonic of the fundamental of the pump laser, wherein a seeding of the second optical parametric amplifier takes place by means of the second white light generation,
**characterized in that**
- during operation the fundamental lies in a wavelength range above 950 nm, and
- the second signal light and the second idler light of the second optical parametric amplifier together cover a tunability range of wavelengths between 500 nm and 5 µm, in particular between 550 nm and 3 µm, wherein
- tuning can be carried out continuously between wavelengths in the tunability range, namely tuning can be carried out continuously through the degeneration range of the second optical parametric amplifier (OPA2) at the fundamental of the pump laser.

## Revendications

1. Agencement d'amplification optique d'amplificateurs optiques paramétriques et de productions de lumière blanche et d'une production d'harmoniques, notamment de doublement de fréquence, pour produire un spectre large, du visible à l'infrarouge, en tout cas à l'infrarouge proche, d'impulsions lumineuses cohérentes ultracourtes, comprenant notamment un laser de pompage, comportant :
- une première production de lumière blanche et un premier amplificateur optique paramétrique de production d'une première lumière de signal et d'une première lumière complémentaire, ainsi qu'une deuxième production de lumière blanche et un deuxième amplificateur optique paramétrique de production d'une deuxième lumière de signal et d'une deuxième lumière complémentaire et la production d'harmoniques, qui sont couplés optiquement de manière à ce que
- en fonctionnement, le premier amplificateur optique paramétrique soit pompé par la première production de lumière blanche et le deuxième amplificateur optique paramétrique soit pompé par la deuxième production de lumière blanche, et dans lequel en fonctionnement
- la première production de lumière blanche et le premier amplificateur optique paramétrique et la production d'harmoniques soient pompés par une fondamentale d'un laser, une seed du premier amplificateur optique paramétrique étant produite au moyen de la première production de lumière blanche et
- la deuxième production de lumière blanche soit produite au moyen du premier amplificateur optique paramétrique et le deuxième amplificateur optique paramétrique soit pompé par un harmonique deuxième ou plus élevé de la fondamentale du laser de pompage, une seed du deuxième amplificateur optique paramétrique étant produite au moyen de la deuxième production de lumière blanche,
**caractérisé en ce que**
- en fonctionnement, la fondamentale est dans un domaine de longueur d'onde au dessus de 950nm et
- la deuxième lumière de signal et la deuxième lumière complémentaire du deuxième amplificateur optique paramétrique recouvrent ensemble un domaine de variation de longueur d'onde comprise entre 500nm et 5µm, notamment entre 550nm et 3µm, dans lequel
- entre des longueurs d'onde dans le domaine de variation, on peut varier en continu complètement, à savoir on peut varier continuellement dans un domaine de dégénération du deuxième amplificateur (OPA2) optique paramétrique à la fondamentale du laser de pompage.

2. Agencement d'amplification suivant la revendication 1, **caractérisé en ce que**
- la deuxième production de lumière blanche est produite au moyen de la première lumière de signal du premier amplificateur optique paramétrique.

3. Agencement d'amplification suivant la revendication 1 ou 2, **caractérisé en ce que**
- au moins la première production de lumière blanche et le premier amplificateur optique paramétrique, ainsi que la production d'harmoniques, notamment le doublement de fréquence, sont constitués en étant pompés par un laser, qui
- fournit la fondamentale dans un domaine de longueur d'onde au dessus de 950nm, notamment juste au-dessus de 1 µm ou au-dessus de 1850nm, notamment au dessus de 2 µm et
- avec une énergie d'impulsion en dessous de 300 µj, notamment en dessous de 100 µj et/ou
- avec un taux de répétition au-dessus de 500 kHz, notamment au-dessus de 100 kHz et/ou
- avec une durée d'impulsion au-dessus de 100 fs, notamment au-dessus de 150 fs, notamment au-dessus de 350 fs, notamment au-dessus de 500 fs ou au-dessus de 1 ps et/ou en dessous de 2 ps.

4. Agencement d'amplification suivant la revendication 1 ou 2, **caractérisé en ce que**
- la fondamentale est produite par un laser de pompage choisi dans le groupe de lasers constitué de : laser au Yb, de laser au Er, de laser au Nd, dans lequel
- en fonctionnement, la fondamentale est dans un domaine de longueur d'onde au-dessus de 950nm, notamment juste au-dessus de 1 µm et
- la deuxième lumière de signal et la deuxième lumière complémentaire du deuxième amplificateur optique paramétrique recouvrent ensemble un domaine de variation de longueur d'onde compris entre 500nm et 5 µm, notamment entre 550nm et 3 µm, de préférence entre 630nm et 2,5 µm, dans lequel
- entre des longueurs d'onde dans le domaine de variation, on peut varier, en continu complètement, notamment on peut varier continuellement dans le domaine de dégénération de l'OPO à la longueur d'onde du laser.

5. Agencement d'amplification suivant la revendication 1 ou 2, **caractérisé en ce que** la fondamentale est produite par un laser de pompage choisi dans le groupe de lasers constitué d'un laser au Tm, dans lequel
- en fonctionnement, la fondamentale est dans un domaine de longueur d'onde autour de 2 µm et
- la deuxième lumière de signal et la deuxième lumière complémentaire du deuxième amplificateur optique paramétrique recouvrent ensemble un domaine de variation de longueur d'onde compris entre 900nm et 20 µm, dans lequel
- entre des longueurs d'onde dans le domaine de variation, on peut varier en continu complètement, à savoir on peut varier continuellement dans le domaine de dégénération de l'OPO à la longueur d'onde du laser.

6. Agencement d'amplification suivant l'une des revendications 1 à 5, **caractérisé en ce que** la première lumière de signal du premier amplificateur optique paramétrique, notamment la deuxième production de lumière blanche, peut être produite à des longueurs d'onde dans un domaine, qui sont plus longues d'au moins jusqu'à 5% que la fondamentale du laser de pompage.

7. Agencement d'amplification suivant l'une des revendications 1 à 6, **caractérisé en ce que**
- le premier amplificateur optique paramétrique et/ou le deuxième amplificateur optique paramétrique fonctionnent suivant une géométrie d'adaptation de phase colinéaire (OPA) et/ou
- le premier amplificateur optique paramétrique et/ou le deuxième amplificateur optique paramétrique ont un cristal non linéaire du type 1, du type 2 ou du type 0, notamment un cristal non linéaire choisi dans le groupe de cristaux constitué de la famille BBO, LBO, KTP ou LNBO3.

8. Agencement d'amplification suivant l'une des revendications 1 à 6, **caractérisé en ce que**
- le premier amplificateur optique paramétrique et/ou le deuxième amplificateur optique paramétrique fonctionnent suivant une géométrie d'adaptation de phase non colinéaire (NOPA) et/ou
- le premier amplificateur optique paramétrique et/ou le deuxième amplificateur optique paramétrique ont un cristal non linéaire du type 1, du type 2 ou du type 0, notamment un cristal non linéaire choisi dans le groupe de cristaux constitué de la famille BBO, LBO, KTP ou LNBO3.

9. Agencement d'amplification suivant l'une des revendications 1 à 8, **caractérisé en ce qu'**en fonctionnement, la première production de lumière blanche et le premier amplificateur optique paramétrique sont pompés par une fondamentale d'un laser, qui est prélevée dans une structure optique de la production d'harmoniques, notamment du doublement de fréquence, notamment la fondamentale d'un laser en transmission derrière la production d'harmoniques.

10. Agencement d'amplification suivant l'une des revendications 1 à 8, **caractérisé en ce qu'**en fonctionnement, la première production de lumière blanche et le premier amplificateur optique paramétrique sont pompés par une fondamentale d'un laser, qui, dans une structure optique, est prélevée directement du laser, notamment la production d'harmoniques, notamment le doublement de fréquence, est disposée dans un bras latéral de la fondamentale, de préférence du laser de pompage.

11. Système laser-amplificateur, comprenant un agencement d'amplification optique suivant l'une des revendications 1 à 10 et un laser de pompage.

12. Système laser-amplificateur suivant la revendication 11, **caractérisé en ce que** le laser de pompage est choisi dans le groupe de lasers constitué de laser au Yb, laser au Nd et laser au Tm.

13. Procédé de production d'un spectre large allant du visible à l'infrarouge, en tout cas à l'infrarouge proche d'impulsions lumineuses cohérentes ultracourtes par un agencement d'amplification optique d'amplificateurs optiques paramétriques et de productions de lumière blanche et d'une production d'harmoniques, notamment un doublement de fréquence, de production d'un spectre large, allant du visible à l'infrarouge, en tout cas à l'infrarouge proche de lumière cohérente, notamment par un laser de pompage, ayant notamment un agencement d'amplification optique suivant l'une des revendications 1 à 10 ou un système laser-amplificateur suivant la revendication 11 ou 12, comportant :
- une première production de lumière blanche et un premier amplificateur optique paramétrique de production d'une première lumière de signal et d'une première lumière complémentaire, ainsi qu'une deuxième production de lumière blanche et un deuxième amplificateur optique paramétrique de production d'une deuxième lumière de signal et d'une deuxième lumière complémentaire et la production d'harmoniques, qui sont couplés optiquement de manière à ce que
- en fonctionnement, le premier amplificateur optique paramétrique est pompé par la première production de lumière blanche et le deuxième amplificateur optique paramétrique est pompé par la deuxième production de lumière blanche, et dans lequel en fonctionnement
- la première production de lumière blanche et le premier amplificateur optique paramétrique et la production d'harmoniques sont pompés par une fondamentale d'un laser, une seed du premier amplificateur optique paramétrique étant produite au moyen de la première production de lumière blanche et
- la deuxième production de lumière blanche est produite au moyen du premier amplificateur optique paramétrique et le deuxième amplificateur optique paramétrique est pompé par un harmoniques deuxième ou plus élevé de la fondamentale du laser de pompage, une seed du deuxième amplificateur optique paramétrique étant produite au moyen de la deuxième production de lumière blanche,
**caractérisé en ce que**
- en fonctionnement, la fondamentale est dans un domaine de longueur d'onde au dessus de 950nm et
- la deuxième lumière de signal et la deuxième lumière complémentaire du deuxième amplificateur optique paramétrique recouvrent ensemble un domaine de variation de longueur d'onde comprise entre 500nm et 5µm, notamment entre 550nm et 3µm, dans lequel
- entre des longueurs d'onde dans le domaine de variation, on peut varier en continu complètement, à savoir on peut varier continuellement dans un domaine de dégénération du deuxième amplificateur (OPA2) optique paramétrique à la fondamentale du laser de pompage.
